# EUROPÄISCHE PATENTSCHRIFT

(11) **EP 2 167 935 B1**
(45) Veröffentlichungstag und Bekanntmachung des Hinweises auf die Patenterteilung: **29.04.2020**
(21) Anmeldenummer: 08784813.1
(22) Anmeldetag: 16.07.2008
(51) Int. Cl.: G01N 11/04

(54) **VORRICHTUNG ZUR MESSUNG DER VISKOSITÄT VON KUNSTSTOFFSCHMELZEN**
DEVICE FOR MEASURING THE VISCOSITY OF PLASTIC MELTS
DISPOSITIF DE MESURE DE LA VISCOSITÉ DE MASSES FONDUES DE MATIÈRE PLASTIQUE

(30) Priorität: 19.07.2007 DE 102007033969
(43) Veröffentlichungstag der Anmeldung: 31.03.2010
(73) Patentinhaber: Gneuss GmbH, 32549 Bad Oeynhausen (DE)
(72) Erfinder: GNEUSS, Detlef, 32545 Bad Oeynhausen (DE)
(74) Vertreter: Tarvenkorn, Oliver
(86) Internationale Anmeldenummer: PCT/EP2008/005810
(87) Internationale Veröffentlichungsnummer: WO 2009/010281

(56) Entgegenhaltungen:
- WO-A-00/15408
- DE-U1- 8 709 717
- GB-A- 2 396 429
- JP-A- 2004 069 363
- US-A- 4 587 837
- US-A- 5 652 376
- US-A- 5 847 268

## Beschreibung

Die Erfindung betrifft eine Vorrichtung zur Messung der Viskosität von Kunststoffschmelzen mit den Merkmalen des Oberbegriffs des Anspruchs 1.

Derartige Vorrichtungen sind z. B. im Laborbereich bekannt. Hier wird die Messstrecke aufwendig in eine Fläche eingefräst. Das Reinigen der Ausfräsung ist sehr aufwendig und umständlich. Hinzu kommt, dass der gefräste Kanal nur einen bestimmten Querschnitt aufweist. Unterschiedlich dimensionierte Messstrecken erfordern den Einsatz einer kompletten zweiten Vorrichtung zur Messung der Viskosität.

Die DE 689 29 247 T2 offenbart bereits eine entsprechende Messvorrichtung, bei der Kunststoffschmelze aus einem Extruder abgezweigt, über eine Pumpe angetrieben zu-einer Messstrecke geführt und über -eine -weitere Pumpe angetrieben wieder in den Extruder zurückgepumpt wird. Die Messstrecke besteht dabei aus zwei Blöcken, zwischen denen eine austauschbare Kapillarplatte angeordnet ist. Die Messvorrichtung ist jedoch sehr teileintensiv und teuer aufgebaut und sehr aufwendig z.B. bezüglich des Wechsels der Kapillarplatte zu betreiben.

Die GB-A-2 396 429 offenbart nur aufwendig herzustellende, den Messkanal aufweisende, auswechselbare Formen für die Gesamtmessstrecke.

Die US 5,847,268 offenbart eine Messvorrichtung bei der auf einem Rohrträger mindestens zwei Druckmessköpfe angeordnet sind. Zwischen den Druckmessköpfen sind auswechselbar gebogene, unterschiedliche Durchmesser aufweisende Kapillare einsetzbar. Eine Goldfolie trennt das zu messende strömende Fluid von der den Druck an die Drucksensoren der Druckmessköpfe übertragenden Flüssigkeit.

Der Erfindung liegt die Aufgabe zugrunde die bekannte Vorrichtung zur Messung der Viskosität so weiter zu bilden, dass sie aus möglichst wenigen Teilen besteht, möglichst universell einsetzbar ist, sowie kostengünstig zu betreiben und insbesondere die Messstreckenbegrenzung leicht und einfach zu wechseln ist.

Zur Lösung der Aufgabe wird vorgeschlagen, dass die Vorrichtung zur Messung der Viskosität von Kunststoffschmelzen mit einem Schmelzekanal und einer Messstrecke ausgestattet ist, welche zwischen zwei planparallel angeordneten Flächen ausgebildet ist, zwischen die eine, die Messstrecke in Form eines Schlitzes aufweisende, auswechselbare, planparallele Messstreckenbegrenzung angeordnet ist, wobei sowohl der von dem Schmelzekanal abgezweigte Hinlauf und Rücklauf für die Schmelze, als auch die Öffnungen für die Messsensoren im Bereich des Schlitzes der Messstreckenbegrenzung mindestens einer der planparallelen Flächen enden, und wobei der Rücklauf kürzer als der Hinlauf ausgebildet und nur im Hinlauf einer Pumpe angeordnet ist.

Dadurch, dass die Vorrichtung sowohl einen Schmelzekanal als auch die Messstrecke aufweist, können diese möglichst nahe beieinander liegen, wodurch der Hin- und insbesondere der Rücklauf besonders kurz ausgebildet, Druckverluste sehr gering gehalten und Druckschwankungen, die sich sonst aus Viskositätsveränderungen ergeben, vernachlässigbar klein gehalten werden können. Durch diesen Aufbau ist es auch möglich, dass nur eine Pumpe benötigt wird.

Von Vorteil ist, dass die planparallelen Fläche in einem den Schmelzekanal umgebenden, zweigeteilten Gehäuse untergebracht sind, wobei das Gehäuse im Bereich der planparallelen Flächen geteilt ist und die Gehäuseteile mit den planparallelen Flächen unter Zwischenschaltung der Messstreckenbegrenzung zusammenfügbar sind.

Dadurch dass die Vorrichtung in einem Gehäuse angeordnet ist, ist ein sehr kompakter Aufbau der Vorrichtung möglich, wodurch eine besonders gute Temperaturführung gewährleistet ist.

Es hat sich bewährt, dass die Gehäuseteile über Scharniere miteinander verbunden und derart beabstandet sind, dass die Messstreckenbegrenzung zwischen den planparallelen Flächen positioniert werden kann. Durch Öffnen einer der Seiten des zweiteiligen Gehäuses kann ein Gehäuseteil vom anderen abgeklappt werden. Die zu reinigenden planparallelen Flächen sind leicht zugänglich und die Messstreckenbegrenzung kann leicht ausgetauscht werden.

Nachahmenswert ist, dass das Gehäuse in Form einer runden Scheibe mit mittig, axial angeordnetem Schmelzekanal ausgebildet ist und dass das Gehäuse durch einen tangential angeordneten Schnitt in zwei Teile geteilt ist und die Messstreckenbegrenzung zwischen den beiden Gehäuseteilen angeordnet ist. Durch die runde Form ist eine bestmögliche Temperaturführung gewährleistet.

Vorzugsweise ist die austauschbare Messstreckenbegrenzung als einmal verwendbare Metallfolie ausgebildet. Anders als beim oben zitierten Stand der Technik, nach dem die Kapillarplatte gereinigt werden soll, ist hier ein einfacher Aus- tausch kostengünstig zu erstellender Folien vorgesehen, deren Reinigung zu umständlich wäre, und in der Regel zu Mess- und Dichtigkeitsproblemen führen würde.

Besonders vorteilhaft ist, dass unterschiedliche Metallfolien Schlitze unterschiedlicher Breite aufweisen können. Durch den Austausch von Messstreckenbegrenzungen mit einem Schlitz einer bestimmten Breite gegen einen Schlitz einer anderen Breite lassen sich unterschiedliche Materialien, auch mit sehr verschiedenen Viskositäten, problemlos durch die erfindungsgemäße Vorrichtung bearbeiten.

Eine weitere Möglichkeit, den Querschnitt der Messstrecke zu verändern, besteht darin, dass unterschiedliche Metallfolien unterschiedliche Dicken aufweisen können. Dazu ist der Abstand der planparallelen Flächen auf die Dicke der jeweiligen Messstreckenbegrenzungen einstellbar.

Es hat sich bewährt, dass die Messstreckenbegrenzungen/ Metallfolien mindestens eine Zentriervorrichtung aufweisen, die mit mindestens einem Zentriergegenstück in mindestens einem der Gehäuseteile zusammenwirken. Dadurch ist gewährleistet, dass die Messstreckenbegrenzung nach ihrem Austausch und Einbau problemlos optimal zwischen den beiden Gehäuseteilen positioniert ist.

Von Vorteil ist auch, wenn zumindest den planparallelen Flächen Heizvorrichtungen zugeordnet sind, so dass die durch die Messstrecke transportierte Schmelze keine Viskositätsänderung durch Temperaturschwankungen erleidet. Dazu trägt auch bei, wenn der Messstreckenbegrenzung eine Heizvorrichtung zugeordnet ist.

Bei Bedarf kann zwischen der Messstreckenbegrenzung und mindestens einer der beiden planparallelen Flächen in den Gehäuseteilen eine Dichtung vorgesehen sein.

Ein universeller Einsatz der Vorrichtung ist gewährleistet, wenn der Schmelzekanal der Vorrichtung zwischen dem Kopfstück eines Extruders und dem Eingang einer Spritzgießform angeordnet, z.B. eingeklemmt, ist.

Die Erfindung wird anhand einer Zeichnung näher erläutert. Dabei zeigen
- Fig. 1: die erfindungsgemäße Vorrichtung in aufgeklapptem Zustand und
- Fig. 2: die perspektivische, geschnittene Ansicht der erfindungsgemäßen Vorrichtung.

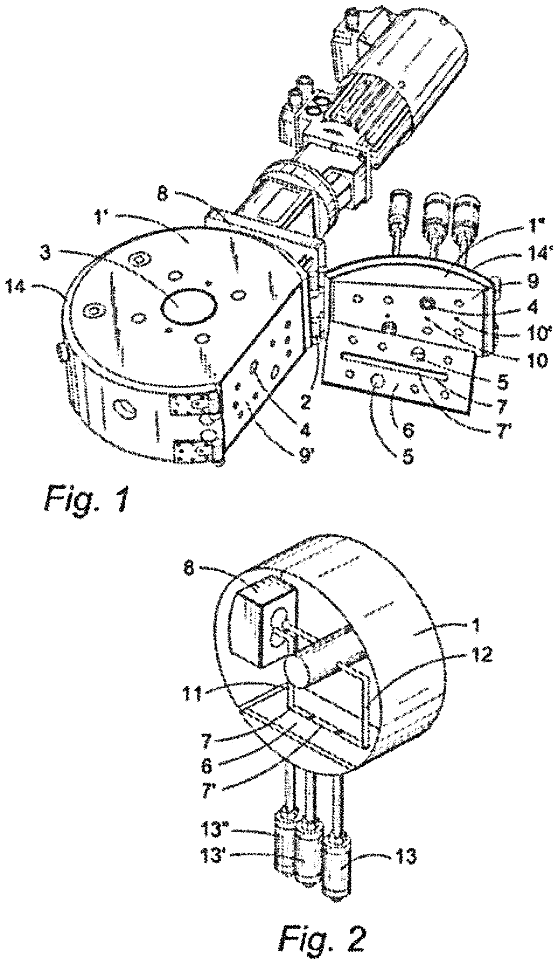

Fig. 1 zeigt ein Gehäuse 1 der Vorrichtung. Das Gehäuse 1 besteht aus einem Gehäuseteil 1' und einem Gehäuseteil 1", der über ein Scharnier 2 mit dem Gehäuseteil 1' verbunden ist. Im Gehäuseteil 1' ist der Schmelzekanal 3 zu erkennen. Der Gehäuseteil 1" weist Zentriervorrichtungen 4, 4' auf, die mit entsprechenden Gegenzentriervorrichtungen 5, 5' in der Messstreckenbegrenzung 6 zusammenwirken. Die Zentriervorrichtungen können selbstverständlich auch in der Messstreckenbegrenzung 6 angeordnet werden, während die Gegenzentriervorrichtungen pdann in mindestens in einem der Gehäuseteile 1', 1" untergebracht sind. Die Messstreckenbegrenzung 6 kann damit auf dem Gehäuseteil 1" zentriert aufgesetzt werden. Ein Teil des in der Messstreckenbegrenzung 6 angeordneten Schlitzes 7 stellt im zusammengeklappten Zustand der Gehäuseteile 1' und 1" die Messstrecke 7' dar.

Am Gehäuseteil 1' ist eine Pumpe 8 angeordnet, über die die aus dem Schmelzekanal 3 ausgeschleuste Schmelze durch die Messstrecke 7' mit vorgebbarem Druck gepumpt wird. Im Gehäuseteil 1" sind drei Sensoren 13, 13', 13" angeordnet, deren Messdosen in der planparallelen Fläche 9 des Gehäuseteils 1" an den Positionen 10, 10', 10" enden. Bei den Sensoren 13 und 13' handelt es sich beispielsweise um Drucksensoren. Über die Messtrecke 7', die zwischen diesen beiden Drucksensoren, d.h. zwischen den Positionen 10 und 10', ausgebildet ist, wird über den Druckabfall die Viskosität bestimmt. Bei dem Sensor 13" handelt es sich beispielsweise um einen Temperatursensor.

Die Fig. 2 zeigt das Gehäuse 1 mit dem Schmelzekanal 3, von dem der Hinlauf 11 und die-Rücklauf 12 abgehen. Der Hinlauf 11 führt über die Pumpe zur Messstrecke 7', die durch den Schlitz 7 in der Messstreckenbegrenzung 6 ausgebildet ist.

Die erfindungsgemäße Vorrichtung funktioniert dabei wie folgt. Aus dem Schmelzekanal 3, der mit vorzugsweise strömender Schmelze gefüllt ist, wird durch die Pumpe 8 über den Hinlauf 11 Schmelze mit einem bestimmten Druck in die Messstrecke 7' gepumpt. Über die Sensoren 13, 13' kann dann z. B. der Druckabfall der Schmelze auf die Länge der Messstrecke 7' ermittelt werden, wodurch sich die Viskosität der Schmelze berechnen lässt.

Dabei wird über Heizvorrichtungen 14, 14', beispielsweise Heizschalen, gewährleistet, dass die Schmelze im Gehäuse 1 nicht zu stark abkühlt.

### Bezugszeichenübersicht:

- 1: Gehäuse
- 1', 1": Gehäuseteile
- 2: Scharniere
- 3: Schmelzkanal
- 4: Zentriervorrichtung
- 5: Gegenzentriervorrichtung
- 6: Messstreckenbegrenzung
- 7: Schlitz
- 7': Messstrecke
- 8: Pumpe
- 9, 9': planparallele Fläche
- 10: Position
- 11: Hinlauf
- 12: Rücklauf
- 13, 13', 13": Sensoren
- 14: Heizvorrichtungen

## Patentansprüche

1. Vorrichtung zur Messung der Viskosität von Kunststoffschmelzen,
mit einem Gehäuse (1), das einen inneren Schmelzekanal (3) aufweist und das an planparallelen Flächen (9, 9') in zwei Gehäuseteile (1', 1") zweigeteilt ist,
und mit einer auswechselbaren, planparallelen Messstreckenbegrenzung (6), die zwischen den planparallelen Flächen (9, 9') angeordnet ist und die eine Messstrecke (7') in Form eines Schlitzes (7) aufweist, wobei:
- von dem Schmelzekanal (3) im Gehäuse (1) ein Hinlauf (11) und ein Rücklauf (12) abzweigen, die jeweils im Bereich des Schlitzes (7) der Messstreckenbegrenzung (6) an einer der planparallelen Flächen (9, 9') enden,
- der Rücklauf (12) kürzer als der Hinlauf (11) ausgebildet ist,
- nur im Hinlauf (11) eine Pumpe angeordnet ist, und wobei
- Öffnungen (10, 10', 10") für Messsensoren (13, 13', 13") im Bereich des Schlitzes (7) der Messstreckenbegrenzung (6) an einer der planparallelen Flächen (9, 9') enden,
**dadurch gekennzeichnet, dass** die austauschbare Messstreckenbegrenzung (6) als einmal verwendbare Metallfolie ausgebildet ist.

2. Vorrichtung nach Anspruch 1, **dadurch gekennzeichnet, dass** die Gehäuseteile (1', 1") über Scharniere (2) miteinander verbunden und derartig beabstandet sind, dass die Messstreckenbegrenzung (6) zwischen den planparallelen Flächen (9, 9') positioniert werden kann.

3. Vorrichtung nach einem der Ansprüche 1 oder 2, **dadurch gekennzeichnet,**
- **dass** das Gehäuse (1) die Form einer runden Scheibe mit dem mittig und axial angeordnetem Schmelzekanal (3) aufweist und
- **dass** das Gehäuse (1) durch einen Sekantenschnitt getrennt ist und die Messstrecke (7') zwischen den beiden Gehäuseteilen (1', 1") angeordnet ist.

4. Vorrichtung nach einem der Ansprüche 1 bis 3, **dadurch gekennzeichnet, dass** unterschiedliche Metallfolien Schlitze (7) unterschiedlicher Breite aufweisen.

5. Vorrichtung nach einem der Ansprüche 1 bis 4, **dadurch gekennzeichnet, dass** unterschiedliche Metallfolien unterschiedliche Dicken aufweisen.

6. Vorrichtung nach einem der Ansprüche 1 bis 5, **dadurch gekennzeichnet, dass** jede Metallfolie mindestens eine Zentriervorrichtung (5, 4) aufweist, die mit einer Gegenzentriervorrichtung (4, 5) in mindestens einem der Gehäuseteile (1', 1") zusammenwirkt.

7. Vorrichtung nach einem der Ansprüche 1 bis 6, **dadurch gekennzeichnet, dass** zumindest den planparallelen Flächen (9, 9') Heizvorrichtungen (14, 14') zugeordnet sind.

8. Vorrichtung nach einem der Ansprüche 1 bis 7, **dadurch gekennzeichnet, dass** der Messstreckenbegrenzung (6) eine Heizvorrichtung zugeordnet ist.

9. Vorrichtung nach einem der Ansprüche 1 bis 8, **dadurch gekennzeichnet, dass** zwischen der Messstreckenbegrenzung (6) und mindestens einem der Gehäuseteile (1', 1") und/oder mindestens einer der planparallelen Flächen (9, 9') eine Dichtung vorgesehen ist.

10. Vorrichtung nach einem der Ansprüche 1 bis 9, **dadurch gekennzeichnet, dass** der Schmelzekanal (3) der Vorrichtung zwischen dem Kopfstück eines Extruders und dem Eingang einer Spritzgießform angeordnet ist.

## Claims

1. Device for measuring the viscosity of plastic melts,
comprising a housing (1), which has an inner melt channel (3) and which is divided in two at plane-parallel surfaces (9, 9'), into two housing parts (1', 1"),
and comprising an exchangeable, plane-parallel measurement path limiter (6), which is arranged between the plane-parallel surfaces (9, 9') and which has a measurement path (7') in the form of a slot (7), wherein:
- an outgoing line (11) and a return line (12) branch off from the melt channel (3) in the housing (1) and end in each case in the region of the slot (7) of the measurement path limiter (6) at one of the plane-parallel surfaces (9, 9'),
- the return line (12) is formed as shorter than the outgoing line (11],
- a pump is arranged only in the outgoing line (11), and wherein
- openings (10, 10', 10") for measuring sensors (13, 13', 13") end in the region of the slot (7) of the measurement path limiter (6) at one of the plane-parallel surfaces (9, 9'),
**characterized in that** the exchangeable measurement path limiter (6) is formed as a single-use metal foil.

2. Device according to Claim 1, **characterized in that** the housing parts (1', 1") are connected to one another by way of hinges (2) and are spaced apart in such a way that the measurement path limiter (6) can be positioned between the plane-parallel surfaces (9, 9').

3. Device according to either of Claims 1 and 2, **characterized**
- **in that** the housing (1) has the form of a round disc with the melt channel (3) arranged centrally and axially and
- **in that** the housing (1) is separated by a secant section and the measurement path (7') is arranged between the two housing parts (1, 1").

4. Device according to one of Claims 1 to 3, **characterized in that** different metal foils have slots (7) of different widths.

5. Device according to one of Claims 1 to 4, **characterized in that** different metal foils have different thicknesses.

6. Device according to one of Claims 1 to 5, **characterized in that** each metal foil has at least one centring device (5, 4), which interacts with a counter centring device (4, 5) in at least one of the housing parts (1, 1").

7. Device according to one of Claims 1 to 6, **characterized in that** at least the plane-parallel surfaces (9,9') are assigned heating devices (14, 14').

8. Device according to one of Claims 1 to 7, **characterized in that** the measurement path limiter (6) is assigned a heating device.

9. Device according to one of Claims 1 to 8, **characterized in that** a seal is provided between the measurement path limiter (6) and at least one of the housing parts (1', 1") and/or at least one of the plane-parallel surfaces (9, 9').

10. Device according to one of Claims 1 to 9, **characterized in that** the melt channel (3) of the device is arranged between the head piece of an extruder and the inlet of an injection mould.

## Revendications

1. Dispositif pour mesurer la viscosité de matières plastiques fondues,
comprenant un boîtier (1) qui présente un canal de matière fondue intérieur (3) et qui est divisé en deux parties de boîtier (1', 1") au niveau de surfaces plan-parallèles (9, 9'), et
comprenant une délimitation de section de mesure remplaçable, plan-parallèle (6), qui est disposée entre les surfaces plan-parallèles (9, 9') et qui présente une section de mesure (7') sous la forme d'une fente (7),
dans lequel :
- une alimentation (11) et un retour (12) partent du canal de matière fondue (3) dans le boîtier (1), lesquels se terminent à chaque fois dans la région de la fente (7) de la délimitation de section de mesure (6) au niveau de l'une des surfaces plan-parallèles (9, 9'),
- le retour (12) est réalisé sous forme plus courte que l'alimentation (11),
- une pompe est disposée seulement dans l'alimentation (11), et
- des ouvertures (10, 10', 10") pour des capteurs de mesure (13, 13', 13") se terminent dans la région de la fente (7) de la délimitation de section de mesure (6) au niveau de l'une des surfaces plan-parallèles (9, 9'), **caractérisé en ce que** la délimitation de section de mesure remplaçable (6) est réalisée sous forme de film métallique à usage unique.

2. Dispositif selon la revendication 1, **caractérisé en ce que** les parties de boîtier (1', 1") sont connectées l'une à l'autre par des charnières (2) et sont espacées de telle sorte que la délimitation de section de mesure (6) puisse être positionnée entre les surfaces plan-parallèles (9, 9').

3. Dispositif selon l'une quelconque des revendications 1 et 2, **caractérisé en ce que**
- le boîtier (1) présente la forme d'un disque rond avec le canal de matière fondue (3) disposé centralement et axialement et
- le boîtier (1) est séparé par une coupe sécante et la section de mesure (7') est disposée entre les deux parties de boîtier (1', 1").

4. Dispositif selon l'une quelconque des revendications 1 à 3, **caractérisé en ce que** les différents films métalliques présentent des fentes (7) de largeurs différentes.

5. Dispositif selon l'une quelconque des revendications 1 à 4, **caractérisé en ce que** différents films métalliques présentent des épaisseurs différentes.

6. Dispositif selon l'une quelconque des revendications 1 à 5, **caractérisé en ce que** chaque film métallique présente au moins un dispositif de centrage (5, 4) qui coopère avec un dispositif de centrage conjugué (4, 5) dans au moins l'une des parties de boîtier (1', 1").

7. Dispositif selon l'une quelconque des revendications 1 à 6, **caractérisé en ce que** des dispositifs de chauffage (14, 14') sont associés au moins aux surfaces plan-parallèles (9, 9').

8. Dispositif selon l'une quelconque des revendications 1 à 7, **caractérisé en ce qu'**un dispositif de chauffage est associé à la délimitation de section de mesure (6).

9. Dispositif selon l'une quelconque des revendications 1 à 8, **caractérisé en ce qu'**entre la délimitation de section de mesure (6) et au moins l'une des parties de boîtier (1', 1") et/ou au moins l'une des surfaces plan-parallèles (9, 9') est prévu un joint d'étanchéité.

10. Dispositif selon l'une quelconque des revendications 1 à 9, **caractérisé en ce que** le canal de matière fondue (3) du dispositif est disposé entre la partie de tête d'une extrudeuse et l'entrée d'un moule de moulage par injection.
